# DEMANDE DE BREVET EUROPEEN

(11) **EP 1 108 928 A1**
(43) Date de publication de la demande: **20.06.2001**
(21) Numéro de dépôt: 99870263.3
(22) Date de dépôt: 16.12.1999
(51) Int. Cl.: F16K 1/22, F16K 27/02

(54) **Système d'assemblage d'un robinet à papillon**

(71) Demandeur: Techspace Aero S.A., 4041 Herstal (BE)
(72) Inventeur: Lassarrade, Pierre, 4000 Liege (BE)
(74) Mandataire: Van Malderen, Joelle

(57) **Abrégé**

Vanne à perte de charge comprenant un corps de vanne (1) associé à un organe externe de réglage ou de commande qui agit sur un obturateur mobile (4) situé dans le chemin d'un fluide qui s'écoule dans un conduit d'écoulement (3), caractérisée en ce que le conduit d'écoulement (3) de chaque côté dudit obturateur (4) est délimité par une chemise rapportée (6) qui est disposée de manière essentiellement perpendiculaire à l'axe dudit obturateur.

## Description

### Objet de l'invention

La présente invention se rapporte à un système d'assemblage des pièces dans une vanne.

### Etat de la technique

L'ensemble des pièces de commande dans une vanne génératrice de perte de charge est habituellement monté au travers d'un alésage qui est usiné dans le corps de la vanne suivant un axe perpendiculaire à l'axe du conduit d'écoulement du fluide. Cet alésage permet donc d'insérer un obstacle sous la forme d'un obturateur dans le chemin d'écoulement du fluide. Par exemple, l'obturateur peut être tournant.

L'inconvénient de ce type d'assemblage est qu'il crée une zone de perturbation de l'écoulement du fluide au niveau de l'intersection entre ledit alésage et ledit conduit d'écoulement, par l'apparition de pertes de charge parasites et incontrôlables à cet endroit.

Un tel type d'assemblage constitue donc une source d'imprécision au niveau du réglage du débit du fluide.

### Buts de l'invention

La présente invention vise à optimiser l'écoulement d'un fluide à l'intérieur du conduit d'écoulement d'une vanne à perte de charge.

La présente invention vise également à éviter le problème des imprécisions au niveau du réglage du débit dudit fluide en rendant le flux d'écoulement plus laminaire et en supprimant les pertes de charge parasites et incontrôlables.

La présente invention vise aussi à fournir un système de régulation du débit d'un fluide permettant d'atteindre une haute précision et une haute reproductibilité dans le fonctionnement de la vanne.

Enfin, la présente invention a pour but la standardisation d'un corps de vanne à un prix raisonnable.

### Principaux éléments caractéristiques de l'invention

La présente invention a pour objet une vanne à perte de charge comprenant un corps de vanne associé à un organe externe de réglage ou de commande qui agit sur un obturateur mobile situé dans le chemin d'un fluide qui s'écoule dans un conduit d'écoulement, caractérisée en ce que le conduit d'écoulement, de chaque côté dudit obturateur, est délimité par une chemise rapportée qui est disposée de manière essentiellement perpendiculaire à l'axe dudit obturateur.

En particulier, l'obturateur mobile est un obturateur tournant à papillon, présentant un axe de rotation perpendiculaire à la direction d'écoulement du fluide.

Généralement, ladite chemise présente une forme essentiellement cylindrique.

En particulier, chaque chemise, située de part et d'autre de l'obturateur, délimite le conduit d'écoulement à partir du plan d'axe de l'obturateur jusqu'à l'extrémité opposée dudit conduit d'écoulement, formant l'extrémité de la vanne.

Selon une forme d'exécution préférée de l'invention, les chemises disposées de part et d'autre de l'obturateur ont le même diamètre intérieur.

De manière particulièrement avantageuse, pour un même corps de vanne, des chemises, prises deux à deux, de différents diamètres intérieurs peuvent être rapportées. On rend de la sorte variable le diamètre du conduit d'écoulement en fonction de la paire de chemises montée sur le corps de vanne et ceci indépendamment du dimensionnement de la vanne proprement dite.

Selon les caractéristiques souhaitées de la vanne, les chemises situées de part et d'autre de l'obturateur peuvent avantageusement avoir un diamètre intérieur variable le long de l'écoulement (par exemple convergent ou divergent).

### Brève description des dessins

Les Figures 1 représentent une coupe en élévation (a) et une coupe en plan (b) d'une vanne à perte de charge réalisée selon l'état de la technique avec un alésage qui est usiné dans le corps de la vanne suivant un axe perpendiculaire à l'axe du conduit d'écoulement du fluide.

Les Figures 2 représentent une coupe en élévation (a) et une coupe en plan (b) d'une vanne à perte de charge selon l'invention.

### Description d'une forme d'exécution préférée de l'invention

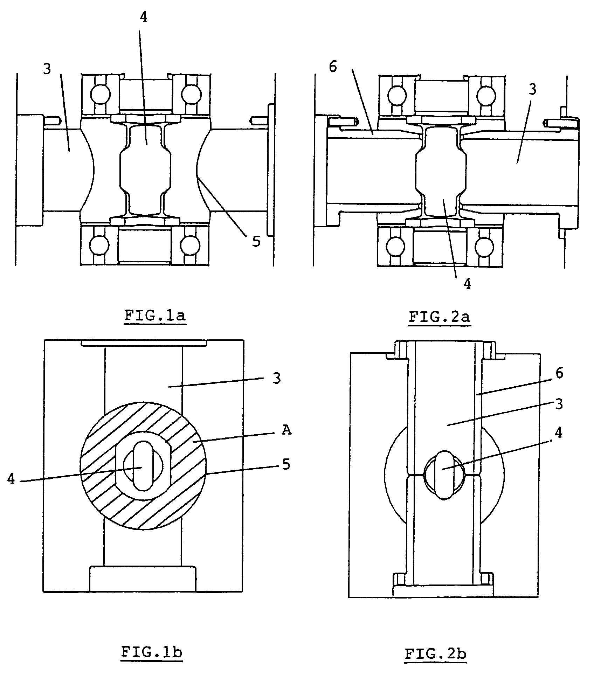

Les Figures 1 montrent l'assemblage des pièces dans une vanne à perte de charge, réalisé selon l'état de la technique. Le corps de vanne 1 présente un conduit d'écoulement 3 « traversé » par un alésage 5 nécessaire pour l'assemblage des pièces de régulation de la vanne, en particulier l'obturateur mobile ou tournant 4.

L'intersection de cet alésage 5 avec le conduit d'écoulement crée une zone « morte » A génératrice de perturbations de l'écoulement du fluide (écoulement turbulent localement, pertes de charge parasites et incontrôlables). Ces perturbations sont d'autant plus importantes que l'on a affaire à une grande variation de section au niveau de l'obturateur.

Afin de remédier à cet inconvénient, il est proposé une solution de chemisage pour l'assemblage des pièces, comme décrit sur les Figures 2. Deux chemises 6, délimitant le conduit d'écoulement de part et d'autre de l'obturateur 4, enveloppent celui-ci et sont ajustées aux pièces connexes. Les pièces peuvent donc être conçues de telle manière que chaque chemise ait une extrémité très proche de l'obturateur.

Cette disposition présente deux avantages importants.

D'abord, elle permet de guider parfaitement ou de manière optimale l'écoulement du fluide, le flux étant beaucoup plus laminaire que dans les solutions de l'état de la technique. Idéalement, l'unique perte de charge est celle créée par l'organe régulateur 4.

Ensuite, l'adoption du chemisage permet de monter sur un même corps de vanne des conduits d'écoulement de diamètres différents, et même de diamètres différents et de section variable en amont et en aval de l'organe régulateur.

## Revendications

1. Vanne à perte de charge comprenant un corps de vanne (1) associé à un organe externe de réglage ou de commande qui agit sur un obturateur mobile (4) situé dans le chemin d'un fluide qui s'écoule dans un conduit d'écoulement (3), caractérisée en ce que le conduit d'écoulement (3) de chaque côté dudit obturateur (4) est délimité par une chemise rapportée (6) qui est disposée de manière essentiellement perpendiculaire à l'axe dudit obturateur.

2. Vanne selon la revendication 1, caractérisée en ce que l'obturateur mobile (4) est un obturateur tournant.

3. Vanne selon la revendication 1 ou 2, caractérisée en ce que ladite chemise (6) présente une forme essentiellement cylindrique.

4. Vanne selon la revendication 1, 2 ou 3, caractérisée en ce que chaque chemise (6) délimite le conduit d'écoulement (3) à partir du plan d'axe de l'obturateur jusqu'à l'extrémité opposée dudit conduit d'écoulement.

5. Vanne selon la revendication 3 ou 4, caractérisée en ce que les chemises (6) disposées de part et d'autre de l'obturateur (5) ont le même diamètre intérieur.

6. Vanne selon la revendication 3 ou 4, caractérisée en ce que les chemises (6) disposée de part et d'autre de l'obturateur (5) ont un diamètre variable le long du conduit d'écoulement.

7. Vanne selon la revendication 4, caractérisée en ce que, pour un même corps de vanne (1), des chemises (6), prises deux à deux et de différents diamètres intérieurs, sont rapportées de sorte à rendre variable le diamètre du conduit d'écoulement (3), en fonction de la paire de chemises (6) montée sur le corps de vanne.
